**Europäisches Patentamt**

**European Patent Office**

**Office européen des brevets**

(11) Numéro de publication: **0 406 104 A1**

# DEMANDE DE BREVET EUROPEEN

(21) Numéro de dépôt: **90401834.8**

(51) Int. Cl.5: **A01G 9/12**

(22) Date de dépôt: **26.06.90**

(30) Priorité: **30.06.89 FR 8908991**

(43) Date de publication de la demande:
**02.01.91 Bulletin 91/01**

(84) Etats contractants désignés:
**AT BE CH DE DK ES FR GB GR IT LI LU NL SE**

(71) Demandeur: **Tempereau, Jacques**
**Les Ormeaux Route de Prunier**
**F-49080 Bouchemaine(FR)**

(72) Inventeur: **Tempereau, Jacques**
**Les Ormeaux Route de Prunier**
**F-49080 Bouchemaine(FR)**

(74) Mandataire: **Phélip, Bruno et al**
**c/o Cabinet Harlé & Phélip 21, rue de La**
**Rochefoucaulduld**
**F-75009 Paris(FR)**

(54) Structure décorative destinée à être associée à un végétal.

(57) La structure selon l'invention comporte une partie décorative (1) pouvant servir de guide de taille et/ou de support à un végétal ; cette partie décorative (1) se prolonge vers le bas par une partie en forme d'embase (2) réservée à l'accueil du substrat du végétal, lequel peut consister en une motte ou en un pot contenant cette motte

Cette structure est avantageusement utilisable dans l'art topiaire pour la taille de végétaux de tous types tels que des sapins, du buis, de la bruyère...

fig. 1

EP 0 406 104 A1

La présente invention concerne une structure décorative destinée à être associée à un végétal pour servir de guide de taille et/ou pour favoriser son maintien en vue d'obtenir des masses végétales aux contours déterminés.

L'art topiaire est actuellement un domaine réservé à une certaine ellite dont les qualités s'apparentent à celles du sculpteur. L'obtention de formes désirées a partir de végétaux les plus divers tels que le buis, les sapins, le thym ou autres... nécessite des qualités artistiques très poussées ainsi qu'un coup de main hors du commun.

Il existe des dispositifs, du type de ceux décrits dans les documents US-A-3.992.812, US-A-4.190.984 ou US-A-4.258.503, visant à vulgariser cet art en procurant à toute personne des moyens pour donner à un végétal une forme pré-établie. De tels dispositifs peuvent également servir de support à la plante, par exemple pour les plantes grimpantes du type lierres.
Ces structures sont simplement destinées à être posées sur le sol, en association avec le végétal, ou sont munies de piquets pour leur maintien en terre. Elles ne sont pas vraiment adaptées pour être associées à des plantes en mottes ou en pots.

L'invention propose de remédier à cet inconvénient en prévoyant un dispositif servant notamment de guide de taille et susceptible d'être très facilement associe avec le substrat d'un végétal constitué d'un pot cylindrique ou tronconique ou simplement d'une motte de même forme.

La structure selon l'invention comporte une partie décorative pouvant servir de guide de taille et/ou de support audit végétal, et une partie en forme d'embase, réservée à l'accueil du substrat dudit végétal en forme de motte ou du pot contenant ce substrat. L'embase qui prolonge la partie décorative a, de préférence, une forme sensiblement cylindrique ou tronconique, de dimension adaptée à celle de la motte ou du pot réceptionné.

Une telle structure peut permettre : soit de disposer la motte directement dans l'embase, le tout étant placé dans un pot, soit d'insérer un pot directement dans l'embase, puis de réaliser par la suite un rempotage après développement de la plante.

Selon un premier mode de réalisation, la structure selon l'invention est constituée d'au moins deux volets, à l'intérieur desquels le végétal est destiné à se développer. elle peut par exemple consister en une structure à plat, constituée de deux volets préassemblés, le volume de la structure étant obtenu par l'écartement desdits volets au moyen du substrat du végétal et/ou par le développement dudit végétal lui-même.

Selon un mode de réalisation préféré, les deux volets préassemblés sont identiques et constitués chacun d'un élément décoratif prolongé vers le bas par un élément destiné à réaliser au moins une partie de l'embase. Chacun de ces derniers présente de préférence une forme sensiblement trapézoïdale de façon à obtenir une embase sensiblement tronconique lors de la mise en volume des deux éléments homologues. Le préassemblage des deux volets est réalisé en certains points par des moyens de fixation et le végétal peut se développer entre les parties décoratives, à partir de son substrat logé dans ladite embase.

Selon une variante de réalisation, la structure est constituée d'une association de tranches ou de demi-tranches qui s'étendent dans un plan vertical. Chacune de ces tranches ou demi-tranches définit une partie du contour de l'élément décoratif et une partie de l'embase qui sert de réceptacle au substrat du végétal. Ces tranches ou demi-tranches définissent ainsi un squelette qui peut être rempli.

De préférence, chaque tranche ou demi-tranche est constituée d'un élément filiforme dont la partie inférieure définit une génératrice sensiblement verticale de l'embase sensiblement cylindrique ou tronconique. L'assemblage de ces tranches verticales peut être obtenu au moyen de tranches horizontales ou par des moyens du type mortaises.

Mais l'invention sera encore illustrée sans être aucunement limitée, par la description suivante de différents modes de réalisation, donnés uniquement à titre d'exemples et représentés sur les dessins annexes dans lesquels :
   - la figure 1 représente un mode de réalisation possible de la structure selon l'invention, vue en perspective ;
   - la figure 2 est une vue à plat de l'un des volets constitutifs de la structure représentée figure 1 ;
   - les figures 3 et 4 montrent deux types de moyens de liaison des deux volets destinés à l'obtention de la structure représentée figure 1 ;
   - la figure 5 montre une variante de réalisation de la structure selon l'invention, constituée d'une association de demi-tranches ;
   - la figure 6 montre une demi-tranche isolée ;
   - la figure 7 représente un type de réalisation possible, en anneau, des moyens de liaison des demi-tranches ;
   - la figure 8 montre une rondelle crantée destinée à former le fond de l'embase ;
   - la figure 9 montre une variante de structure, constituée d'un assemblage de tranches complètes avec des moyens de liaison du type mortaises.

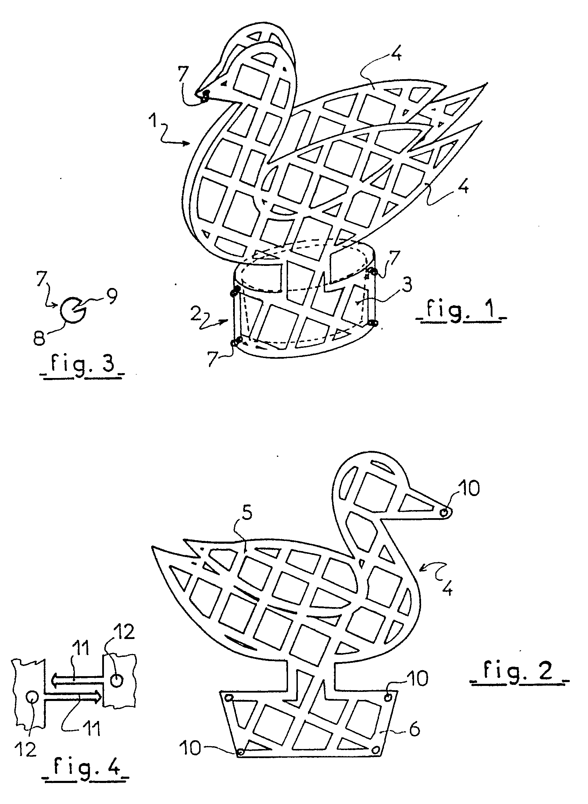

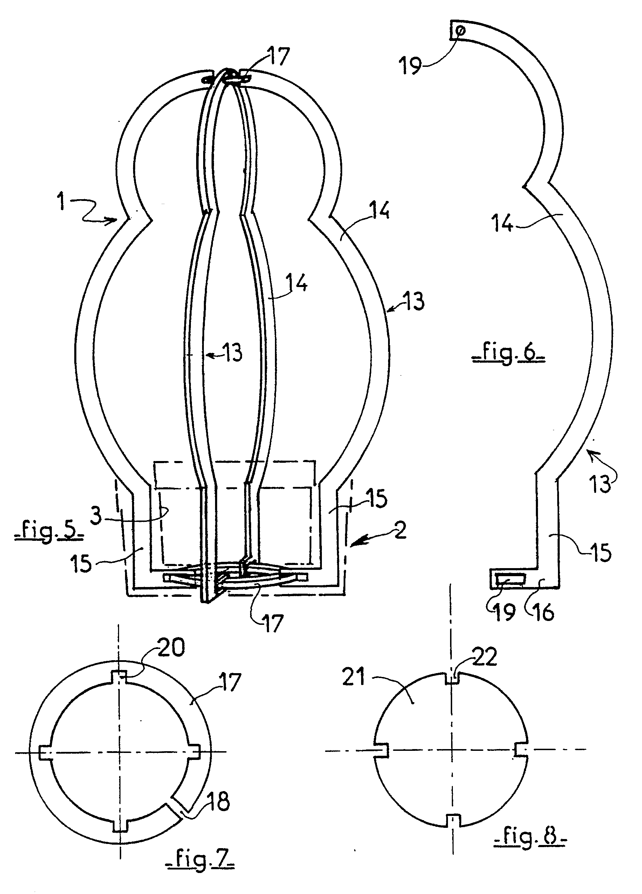

Tel qu'on l'a représenté sur les figures 1, 5 et 9, la structure selon l'invention comporte une partie décorative 1 de nature et de forme quelconques, susceptible d'être associée à un végétal pour procurer notamment un guide ou un repère de taille, au moyen par exemple d'un sécateur. Cette partie décorative 1 est prolongée vers le bas par une partie en forme d'embase 2, de préférence cylindrique ou tronconique, selon le substrat qu'elle va recevoir et de dimensions adaptées a ce substrat. Le substrat peut notamment consister en un pot tronconique 3, schématisé figures 1 et 5, dans lequel on a planté le végétal en association avec une substance nutritive telle que du terreau ; il peut également consister directement en une motte de terreau qui supporte le végétal en développement.

La partie décorative 1 est réalisée en fonction du végétal, selon sa vigueur, son feuillage et ses fleurs ; elle consiste de préférence en une structure en volume à l'intérieur de laquelle le végétal est destiné à se développer.

La structure selon l'invention peut être obtenue par tout moyen tel qu'un modelage de fil métallique, un thermoformage ou moulage d'un matériau plastique, un montage manuel d'éléments préassemblés ou un découpage de feuilles, grillagées ou non, mises ensuite en volume ...

La figure 1 montre un premier mode de réalisation de la structure selon l'invention, obtenue par assemblage et mise en volume de deux volets 4 dont l'un est représenté figure 2. Ces volets 4 sont par exemple obtenus par découpage d'une feuille plane et flexible de matériau approprié grillagé ; ils peuvent également être obtenus par moulage de matériau plastique au moyen, par exemple, de techniques d'injection. Ils comportent chacun un élément décoratif 5 qui se prolonge vers le bas par un élément inférieur 6 qui va permettre la réalisation d'au moins une partie de l'embase 2.

Cet élément inférieur 6 a une forme adaptée au substrat du végétal que l'embase 2 va réceptionner. Dans l'exemple de réalisation représenté, il présente une forme sensiblement trapézoïdale pour la formation d'une embase tronconique avec l'élément homologue.

Les deux volets 4, de préférence identiques, sont préassemblés, à plat, l'un contre l'autre. Ce préassemblage est réalisé au moins au niveau de l'embase 2 en prévoyant des moyens de liaison bord à bord des éléments inférieurs 6 homologues, sur leurs côtés sensiblement verticaux.

Ce préassemblage est de préférence également réalisé en certains points choisis de la périphérie de la partie décorative 1, pour obtenir par la suite un volume.

Différents moyens de liaison peuvent être utilisés pour obtenir le préassemblage des deux volets 4. Il est par exemple possible de prévoir des clips 7 en matériau plastique ou métallique, tels que représentés figure 3, constitués d'un anneau ouvert 8 muni, à chacune de ses extrémités, d'un arrêtoir 9 en forme de butée rentrante. Ce clip 7 va permettre la liaison des volets 4 par pénétration dans des orifices périphériques 10, visibles notamment figure 2.

On a représenté figure 4 une variante de réalisation possible de ces moyens de liaison. Cette variante consiste en des couples de crochets 11 et orifices 12, réalisés de façon monobloc et destinés à former des liaison mâle-femelle par engagement des crochets 11 dans les orifices 12 en vis à vis de l'élément homologue.

Les deux volets 4, à plat, l'un contre l'autre et préassemblés, peuvent être stockés en l'état ou conditionnés pour leur présentation à la vente.

La mise en volume de la structure ci-avant définie permet l'obtention d'une embase 2 tronconique à partir de la bordure supérieure de laquelle s'étend la partie décorative 1. L'embase 2 sert de réceptacle au substrat du végétal, lequel peut consister en une motte constituée des racines du végétal associées à une substance nutritive ou en un pot contenant ces éléments, le tout étant éventuellement introduit dans un pot de dimensions supérieures. Le volume de l'ensemble est maintenu par le substrat du végétal, mais également par le végétal lui-même, lorsqu'il se développe ; la partie décorative 2 définit une portion d'espace, selon les points de liaison choisis, dans lequel va pouvoir se développer la plante. Arrivée à maturité et débordant de cette partie décorative, elle peut être taillée suivant les contours définis.

La partie décorative peut également bien entendu servir de support pour des plantes du type grimpantes.

On peut également envisager d'obtenir une structure voisine de celle précédemment définie, et ceci d'un seul tenant, par moulage de matériau plastique. Les deux volets homologues peuvent alors être réunis par des charnières monobloc.

Une variante de réalisation de la structure selon l'invention est représentée figures 5 à 8.

Cette structure est réalisée par une association d'éléments filiformes 13 qui définissent chacun une partie du contour de l'élément décoratif 1 et une partie du contour de l'embase 2 dans laquelle va se loger le substrat du végétal consistant par exemple en un pot tronconique 3.

Un élément 13 est représenté isolément, figure 6. Cet élément, qui s'étend dans un plan vertical, comporte une partie supérieure 14 dont la forme est fonction de la décoration finale désirée et une partie inférieure 15, verticale ou légèrement inclinée par rapport à la verticale, destinée à former une génératrice de l'embase 2. L'extrémité basse de la partie inférieure 15 se prolonge vers l'intérieur par un retour en équerre 16 qui va former le fond de l'embase 2 ou supporter ce fond.

L'association d'une pluralité d'éléments filiformes 13 permet l'obtention de la structure selon l'invention. Comme on peut le voir figure 5, chaque élément 13 constitue une demi-tranche de ladite structure ; l'association des parties supérieures 14 permet de définir le contour de la partie décorative 1 destinée à être remplie par le végétal et l'association des parties inférieures 15 permet de définir l'embase 2.

Les moyens de liaison des différentes demi-tranches 13 entre elles sont réalisés dans un plan horizontal, par des tranches horizontales constituées d'anneaux 17 dans l'exemple de réalisation représenté. Ces anneaux 17, dont un exemple de réalisation est représenté figure 7, sont disposés à chacune des extrémités de la structure ; ils sont ouverts en 18 pour permettre leur passage dans les orifices extrêmes 19 des éléments filiformes 13.

Une fois les éléments 13 enfilés dans l'anneau 17, l'ouverture 18 peut être refermée par tout moyen approprié ; les éléments 13 sont positionnés les uns par rapport aux autres au moyen de crans 20 dans lesquels ils s'engagent et qui maintiennent leur écartement. D'autres tranches horizontales peuvent être prévues sur la hauteur de la structure.

L'embase 2 de ce mode de réalisation peut être munie d'un fond 21 en forme de rondelle, destinée à venir reposer sur les retours en équerre 16 des éléments filiformes 13. La rondelle 21 peut avantageusement être munie de crans 22 destinés chacun à recevoir la base de la partie inférieure 15. Cette disposition permet d'améliorer le maintien en position et la stabilité de la structure.

Cette structure peut être proposée prête à monter ou en partie préassemblée. Une fois montée, le substrat du végétal vient se loger dans l'embase et en se développant la plante va remplir le volume défini par le squelette de fil ; on peut ainsi utiliser ce dernier à titre de guide de taille pour donner au végétal la forme pré-définie.

A titre de variante, on peut prévoir une association de tranches complètes correspondant à des paires de demi-tranches réunies à leurs niveaux supérieur et inférieur pour obtenir une structure en volume de conception identique.

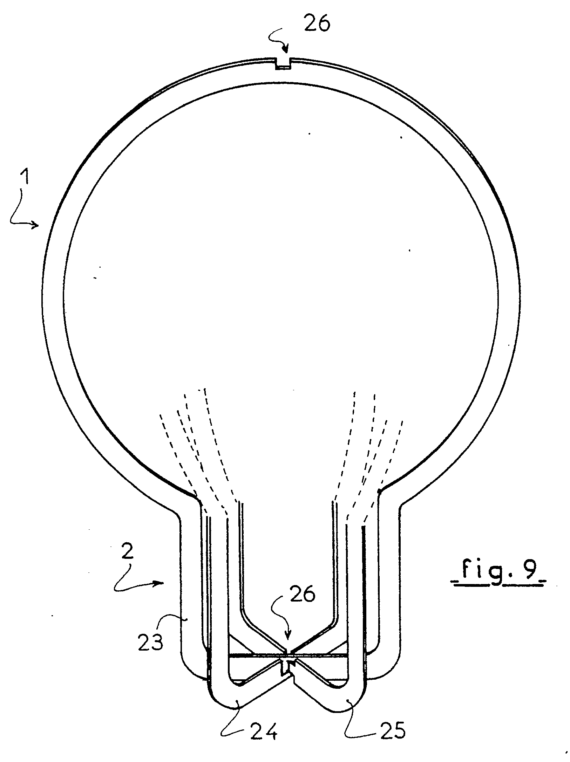

Une telle structure est représentée partiellement figure 9. Les trois tranches 23, 24, 25 associées comportent, à leurs niveaux supérieur et inférieur, des aménagements 26 du type mortaises qui permettent l'encastrement des différents éléments les uns dans les autres pour le maintien en volume de la structure.

Les aménagements 26 en forme de mortaises sont adaptés dans leurs formes et dimensions selon le nombre de tranches à assembler.

Les signes de référence insérés après les caractéristiques techniques mentionnées dans les revendications ont pour seul but de faciliter la compréhension de ces dernières et n'en limitent aucunement la portée.

**Revendications**

1.- Structure destinée à être associée à un végétal, laquelle structure comporte une partie décorative pouvant servir de guide de taille et/ou de support audit végétal, caractérisée en ce qu'elle comporte, associée à ladite partie décorative (1), une partie en forme d'embase (2) réservée à l'accueil du substrat du végétal en forme de motte ou du pot contenant ce substrat.

2.- Structure selon la revendication 1, caractérisée en ce qu'elle comporte une embase (2) sensiblement cylindrique ou tronconique, de dimension adaptée à celle de la motte ou du pot réceptionné.

3.- Structure selon l'une quelconque des revendications 1 ou 2, caractérisée en ce qu'elle est constituée d'au moins deux volets (4) à l'intérieur desquels le végétal est destiné à se développer.

4.- Structure selon l'une quelconque des revendications 1 à 3, caractérisée en ce qu'elle consiste en une structure à plat, constituée de deux volets (4) préassemblés, le volume de ladite structure étant obtenu par l'écartement desdits volets (4) au moyen du substrat du végétal ou du pot contenant ledit substrat.

5.- Structure selon la revendication 4, caractérisée en ce que les deux volets (4) préassemblés sont identiques et constitués chacun d'un élément décoratif (5) prolongé vers le bas par un élément (6) destiné à réaliser au moins une partie de l'embase (2).

6.- Structure selon la revendication 5, caractérisée en ce que chaque élément (6) destiné à réaliser au moins une partie de l'embase (2), présente une forme sensiblement trapézoïdale la mise en volume des deux éléments (6) homologues, préassemblés bord à bord, permettant l'obtention d'une embase (2) sensiblement tronconique pour la réception du substrat du végétal et le développement de ce dernier entre les parties décoratives (5).

7.- Structure selon l'une quelconque des revendications 4 à 6, caractérisée en ce que les volets (4) sont assemblés par des moyens de liaison au niveau des parties (6) formant l'embase (2) et éventuellement en certains points des éléments décoratifs (5).

8.- Structure selon la revendication 7, caractérisée en ce que les moyens de liaison des volets (4) consistent en des anneaux (8) du type clips.

9.- Structure selon la revendication 7, caractérisée en ce que les moyens de liaison des volets (4) consistent en des crochets (11) monobloc venant s'insérer dans des orifices (12) en vis à vis.

10.- Structure selon l'une quelconque des revendications 4 à 6, caractérisée en ce qu'elle est obtenue par moulage de matériau plastique, les deux volets (4) étant réunis par des charnières monobloc.

11.- Structure selon l'une quelconque des revendications 1 ou 2, caractérisée en ce qu'elle est constituée d'une association de tranches ou de demi-tranches s'étendant dans un plan vertical, chacune de ces tranches ou demi-tranches définissant une partie du contour de l'élément décoratif (1) et une partie du contour de l'embase (2) qui sert de réceptacle au substrat du végétal de façon à définir un squelette qui peut être rempli.

12.- Structure selon la revendication 11, caractérisée en ce que chaque tranche ou demi-tranche est constituée d'un élément filiforme (13) dont la partie inférieure (15) définit une génératrice sensiblement verticale de l'embase (2) cylindrique ou tronconique.

13.- Structure selon l'une quelconque des revendications 11 ou 12, caractérisée en ce que l'association des tranches ou demi-tranches est réalisée au moyen d'une liaison dans un plan horizontal pouvant constituer une tranche.

14.- Structure selon l'une quelconque des revendications 11 à 13, caractérisée en ce que l'association des tranches ou demi-tranches est réalisée au moyen d'anneaux (17) munis de crans (18).

15.- Structure selon l'une quelconque des revendications 11 ou 12 caractérisée en ce qu'elle consiste en une association de tranches (23, 24, 25), assemblées par des moyens (26) du type mortaises.

16.- Structure selon l'une quelconque des revendications 11 à 15, caractérisée en ce que l'embase (2) est munie d'un fond en forme de rondelle (20).

17.- Structure selon la revendication 16, caractérisée en ce que le fond (20) est muni d'un crantage (21) pour la réception des tranches ou demi-tranches.

7

1

4

4

7

3

_fig. 1_

7

9

8

_fig. 3_

2

7

5

10

4

10

6

10

_fig. 2_

11

12

12

11

12

_fig. 4_

_fig.5_

_fig.6_

_fig.7_

_fig.8_

_fig. 9_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CH-A-116761 (LINCKE)<br>* le document en entier * | 1, 2, 11-13 | A01G9/12 |
| Y | | 3 | |
| A | | 5, 14 | |
| | --- | | |
| Y,D | US-A-4258503 (BALES)<br>* colonne 1, lignes 1 - 20 * | 3 | |
| A | * colonne 2, ligne 25 - colonne 4, ligne 29; figures 1-3, 7 * | 7, 9, 10 | |
| | --- | | |
| X,P | DE-U-8914479 (RIEDEL)<br>* revendications 1-7; figures 1-3 * | 1-3, 11-13, 16 | |
| | --- | | |
| A | FR-A-1004376 (HELLER)<br>* abrégé; figures 1-3 * | 1-7, 9 | |
| | --- | | |
| A | US-A-4841670 (BITTER)<br>* revendications 1-11; figures 1-4 * | 1, 2, 11-14, 16 | |
| | --- | | DOMAINES TECHNIQUES RECHERCHES (Int. Cl.5) |
| A | GB-A-310627 (RICHARDSON)<br>* le document en entier * | 1, 2, 11-14 | |
| | --- | | A01G |
| A | US-A-3105327 (GASPER)<br>* colonne 1, ligne 69 - colonne 3, ligne 11; figures 1-4 * | 1, 2, 11-14 | A47G |
| | --- | | |
| A | GB-A-426141 (MARROW)<br>* revendications 1-5; figures 1-4 * | 1, 11-13 | |
| | --- | | |
| A,D | US-A-4190984 (PIERCE)<br>* colonne 1, lignes 1 - 21 *<br>* colonne 1, ligne 62 - colonne 2, ligne 37 *<br>* colonne 4, lignes 21 - 40; figures 1-5 * | 1, 3, 4 | |
| | --- | | |
| A | GB-A-453493 (FEARNLEY)<br>* figures 2, 4 * | 17 | |
| | ----- | | |

Le présent rapport a été établi pour toutes les revendications

| Lieu de la recherche | Date d'achèvement de la recherche | Examinateur |
|---|---|---|
| LA HAYE | 03 OCTOBRE 1990 | PERNEY Y. |

EPO FORM 1503 03.82 (P0402)